(19) Europäisches Patentamt

European Patent Office

Office européen des brevets

(11) **EP 0 908 247 B1**

(12) **EUROPÄISCHE PATENTSCHRIFT**

(45) Veröffentlichungstag und Bekanntmachung des Hinweises auf die Patenterteilung:
**17.11.2004 Patentblatt 2004/47**

(51) Int Cl.⁷: $B21B\ 38/06$, $G01L\ 5/10$, $G01L\ 1/14$

(21) Anmeldenummer: **98117997.1**

(22) Anmeldetag: **23.09.1998**

(54) **Einrichtung zur Messung der Zugkraft in einem Metallband**

Device for measuring the tensile force in a metal strip

Dispositif de mesure de la force de traction dans une bande métallique

(84) Benannte Vertragsstaaten:
**AT DE FI SE**

(30) Priorität: **06.10.1997 DE 19744032**

(43) Veröffentlichungstag der Anmeldung:
**14.04.1999 Patentblatt 1999/15**

(73) Patentinhaber: **SIEMENS AKTIENGESELLSCHAFT**
**80333 München (DE)**

(72) Erfinder: **Stammberger, Karl, Dr.**
**91056 Erlangen (DE)**

(56) Entgegenhaltungen:
DE-C- 739 436    GB-A- 643 775
US-A- 2 809 519    US-A- 4 308 929

• **"MILL CONTROL AND MEASUREMENT SENSORS FOR TIGHTER TOLERANCES"** STEEL TIMES INTERNATIONAL.(INC. STEEL TIMES), DMG WORLD MEDIA, REDHILL, SURREY, GB, Bd. 16, Nr. 5, 1. September 1992 (1992-09-01), Seite 40,42 XP000323021 ISSN: 0143-7798
• PATENT ABSTRACTS OF JAPAN vol. 016, no. 078 (P-1317), 25. Februar 1992 (1992-02-25) -& JP 03 267728 A (NIPPON PHILIPS KK), 28. November 1991 (1991-11-28)

**Beschreibung**

Die Erfindung betrifft eine Einrichtung zur Messung der Zugkraft in einem Metallband, insbesondere einem Stahlband, in einer Walzstraße, wobei das Metallband über eine Rolle geführt wird, die in einem Lagerblock gelagert ist, und der Lagerblock ein verankertes Ende und ein freies Ende aufweist, wobei die Rolle im Bereich des freien Endes des Lagerblocks angeordnet ist.

Es ist bekannt, in einem Lagerstuhl um ein Lager einer Rolle herum mit Ausnahme eines schmalen Steges einen umlaufenden Schlitz anzuordnen, wobei der das Lager unmittelbar umgebenden Lagerstuhlbereich durch den Steg elastisch mit einem Außenkörper verbunden ist. Am elastischen Steg sind Dehnungsmeßstreifen angeordnet, die die Dehnung infolge Biegung des elastischen Steges bei Belastung messen. Der elastische Steg ist senkrecht zur Richtung einer durch ein Metallband auf die Rolle wirkenden Kraft angeordnet, so daß, wenn auf die Rolle eine Kraft mit einer vertikalen Komponente ausgeübt wird, unter der Wirkung der Lagerkraft der Rolle im Steg eine reine Biegung herrscht. Bei sich verändernder Kraftrichtung wird die Biegung durch Dehnungsanteile verfälscht, so daß diese Lösung für eine präzise Messung der Zugkraft in einem Metallband unzulänglich ist. Darüberhinaus gibt es unter ungünstigen Umgebungsbedingungen Alterungserscheinungen an Dehnungsmeßstreifen bzw. an deren Klebstellen, so daß diese Lösung nur bedingt einsetzbar ist.

Aus der ABB-Werbeschrift Cat. B07-7504E ist bekannt, einen Lagerstuhl, in dem eine Rolle angeordnet ist, beiderseits in dünnen Membranen zu führen, die senkrecht zur Richtung einer auf die Rolle wirkenden Kraft angeordnet und in Richtung der Kraft verhältnismäßig leicht verformbar sind. Unter der Wirkung einer derartigen Kraft verformen sich die Membranen. Eine unter den Membranen angeordnete Kraftmeßdose mißt die Differenz von äußerer Kraft und Membran-Rückstellkräften. Problematisch ist hierbei ebenfalls, daß Kraftkomponenten, die von der eigentlichen Meßrichtung abweichen durch eine reibungsbehaftete Stützkonstruktion abgefangen werden müssen. Daher ist auch diese Lösung für eine präzise Messung der Zugkraft in einem Metallband, das über die Rolle geführt wird, nur bedingt geeignet.

Aus der deutschen Patentschrift DE-C-739 436 ist eine Einrichtung zum Messen der Zugspannung von bandförmigem Walzgut bekannt. Das Walzgut wird dabei von einem Walzwerk über eine von federnden Hebeln getragene Meßrolle geleitet, wobei die freien Enden der Hebel mit dem Kontakt je eines Potentiometers verbunden sind. Da bei dieser Meßvorrichtung die vertikale Verschiebung der Hebelenden direkt über die beweglichen Teile der Potentiometer abgegriffen wird, ist es fraglich, ob die erforderliche Meßpräzision erreicht werden kann.

Entsprechend ist es Aufgabe der Erfindung, eine Einrichtung anzugeben, die ein besonders präzises Messen der Zugkraft in einem Metallband ermöglicht und insbesondere die Nachteile der bekannten Lösungen umgeht.

Die Aufgabe wird erfindungsgemäß durch eine Einrichtung gemäß Anspruch 1 gelöst. Dabei weist die Einrichtung eine in einem Lagerblock gelagerte Rolle auf, über die das Metallband, dessen Zugbelastung gemessen werden soll, geführt wird. Der Lagerblock weist ein verankertes Ende und ein freies Ende auf, wobei im Bereich des freien Endes die Rolle angeordnet ist und wobei die Einrichtung zur Messung der Zugkraft einen Sensor zur Messung der Lageänderung des freien Endes gegenüber dem verankerten Ende aufweist.

Es hat sich gezeigt, daß eine derartige Anordnung eine besonders präzise Messung der Zugkraft in einem Metallband ermöglicht. Vorteile und Einzelheiten ergeben sich aus der nachfolgenden Beschreibung von Ausführungsbeispielen.

Im einzelnen zeigen:

FIG 1     eine Einrichtung zur Messung der Zugkraft in einem Metallband,

FIG 2     einen Ausschnitt einer Einrichtung zur Messung der Zugkraft in einem Metallband im unbelasteten Zustand,

FIG 3     einen Ausschnitt einer Einrichtung zur Messung der Zugkraft in einem Metallband im belasteten Zustand,

FIG 4     ein Kräftediagramm,

FIG 5     einen Ausschnitt einer Einrichtung zur Messung der Zugkraft in einem Metallband,

FIG 6     eine alternative Ausführung einer Einrichtung zur Messung der Zugkraft in einem Metallband,

FIG 7     eine weitere alternative Ausführung einer Einrichtung zur Messung der Zugkraft in einem Metallband,

FIG 8     eine weitere alternative Ausführung einer Einrichtung zur Messung der Zugkraft in einem Metallband und

FIG 9     eine weitere alternative Ausführung einer Einrichtung zur Messung der Zugkraft in einem Metallband.

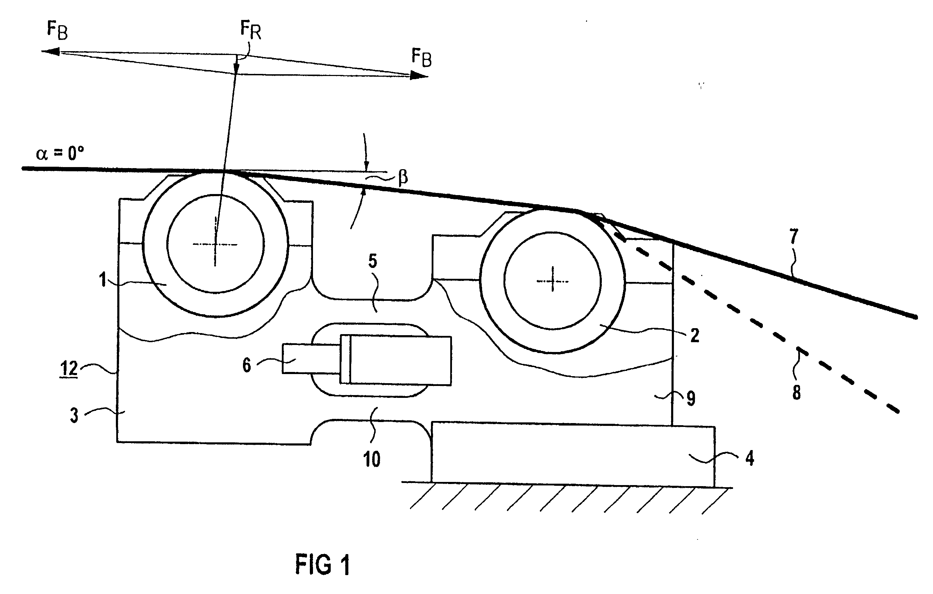

FIG 1 zeigt eine besonders vorteilhafte Ausgestaltung einer erfindungsgemäßen Einrichtung zur Messung der Zugkraft $F_B$ in einem Metallband 7, insbesondere einem Stahlband. Diese Einrichtung weist einen Lagerblock 12 mit einem freien Ende 3 und einem in einer Verankerung 4 verankerten Ende 9 auf. Das freie Ende 3 des Lagerblocks 12 und das verankerte Ende 9 des Lagerblocks 12 sind über Biegeträger 5 und 10 miteinander verbunden. Im Ausführungsbeispiel gemäß FIG 1 sind zwei Biegeträger 5 und 10 vorgesehen. Es können jedoch mehr Biegeträger vorgesehen werden. Am freien Ende 3 des Lagerblocks 12 ist eine Rolle 1 angeordnet, über die ein Metallband 7 geführt wird. Das Metallband 7 läuft unter einem Einlaufwinkel α gegenüber der horizontalen auf die Rolle 1 zu und unter einem Ablaufwinkel β gegenüber der horizontalen von der Rolle 1 weg. Im vorliegenden Ausführungsbeispiel wird von einem Einlaufwinkel α = 0° ausgegangen. Im Metallband 7 herrscht eine Zugkraft $F_B$, so daß das Metallband 7 eine Kraft $F_R$ auf die Rolle 1 ausübt.

Es hat sich als besonders vorteilhaft erwiesen, eine Umlenkrolle 2 am verankerten Ende 9 des Lagerblocks 1 vorzusehen, über die das Metallband 7 geführt wird. Die Umlenkrolle 2 wird derart angeordnet, daß sich unabhängig von einer dem Lagerblock folgenden Einrichtung ein fester und nicht veränderlicher Ablaufwinkel β ergibt. Es hat sich weiterhin als besonders vorteilhaft erwiesen, die Rollen 1 und 2 derart anzuordnen, daß sich ein Ablaufwinkel β von 3 bis 15°, vorteilhafterweise von 5 bis 10° ergibt. Mit einer derartigen Wahl des Ablaufwinkels β ist ein besonders präziser Wert für die Zugkraft $F_B$ im Metallband 7 ermittelbar.

Die auf die Rolle 1 wirkende Kraft $F_R$ führt auf Grund der Elastizität in den Biegeträgern 5 und 10 zu einer im wesentlichen vertikalen, Verschiebung des freien Endes 3 dieses Lagerblocks 12 gegenüber dem verankerten Ende 9 des Lagerblocks 12. Diese Auslenkung wird mittels eines Sensors 6 gemessen, der vorteilhafterweise als kapazitiver Sensor ausgebildet ist.

Die gestrichelte Linie 8 zeigt einen möglichen Verlauf des Metallbandes 7, wobei eine derartige Veränderung des Verlaufs des Metallbandes 7 durch eine Einrichtung hinter dem Lagerblock 12 verursacht wird. Dies gilt insbesondere dann, wenn dem Lagerblock 12 ein Haspel zum Aufhaspeln des Metallbandes 7 folgt.

Die Ausgestaltung gemäß FIG 1 zeichnet sich besonders durch die Messung einer vertikalen Verschiebung aus. Das Messen einer vertikalen bzw. annähernd vertikalen Verschiebung ist für die Bandzugmessung besonders vorteilhaft.

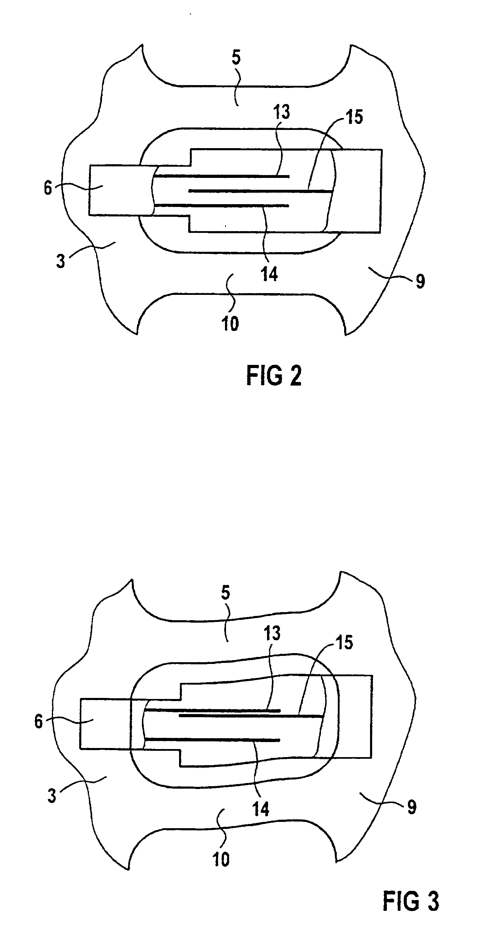

FIG 2 und 3 verdeutlichen das Meßprinzip zur Messung der Zugkraft in einem Metallband 7 mittels der erfindungsgemäßen Einrichtung. Dabei zeigt FIG 2 die Biegeträger 5 und 10 zwischen dem freien Ende 3 des Lagerblocks und dem verankerten Ende 9 des Lagerblocks im unbelasteten Zustand, d.h., in dem Zustand indem keine Kraft auf das freie Ende 3 des Lagerblocks wirkt. Bezugszeichen 6 bezeichnet den Sensor zur Messung der vertikalen Verschiebung des freien Endes 3 des Lagerblocks gegenüber dem verankerten Ende 9 des Lagerblocks. Der Sensor 6 ist als kapazitiver Sensor ausgebildet und weist auf der einen Seite mindestens zwei Elektroden 13 und 14 und auf der anderen Seite mindestens eine Elektrode 15 auf.

Aus Gründen der Übersichtlichkeit ist der Sensor in FIG 2 und 3 mit zwei Elektroden 13 und 14 auf der einen und einer Elektrode 15 auf der anderen Seite dargestellt. Vorteilhafte Ausgestaltungen für die Sensoren 6 weisen jedoch auf jeder Seite eine Mehrzahl von Elektroden auf, die kammartig ineinandergreifen.

FIG 3 zeigt den Ausschnitt des Lagerblocks 12 aus FIG 2 im belasteten Zustand, d.h., in dem Zustand in dem auf Grund der Zugkraft $F_B$ im Metallband 7 eine Kraft auf das freie Ende 3 des Lagerblocks 1 ausgeübt wird. Durch diese Kraft kommt es auf Grund der Elastizität der Biegeträger 5 und 10 zu einer Verschiebung des freien Endes 3 des Lagerblocks gegenüber dem verankerten Ende 9 des Lagerblocks. Diese Verschiebung wird durch den Sensor 6 gemessen. Durch die Verschiebung des freien Endes 3 gegenüber dem verankerten Ende 9 werden auch die Elektroden 13 und 14 gegenüber der Elektrode 15 verschoben, wodurch sich eine Kapazitätsänderung der als Kondensator wirkenden Anordnung der Elektroden 13,14 und 15 einstellt. Diese Kapazitätsänderung wird gemessen und in eine vertikale Wegänderung bzw. in Kraft umgerechnet. Die Elektroden 13,14,15 des Kondensators sind vorteilhafterweise als Kondensatorplatten ausgebildet. Die Ausbildung des Sensors 6 der erfindungsgemäßen Einrichtung zur Messung der Zugkraft in einem Metallband 7 als kapazitiver Sensor ist besonders vorteilhaft. Dabei wird der kapazitive Sensor besonders vorteilhaft derart angeordnet, daß die Kondensatorplatten senkrecht zur Hauptverformungsrichtung oder annähernd senkrecht zur Hauptverformungsrichtung liegen. Die Hauptverformungsrichtung ist dabei die Richtung der maximalen Verschiebung des freien Endes 3 des Lagerblocks 12, verursacht durch die Zugkraft $F_B$ im Metallband 7. Ist der kapazitive Sensor derart angeordnet, daß die Kondensatorplatten in etwa senkrecht zur Hauptverformungsrichtung liegen, so können Verformungen in den verbleibenden beiden Raumrichtungen vernachlässigt werden.

Die Kapazität C des kapazitiven Sensors errechnet sich gemäß

$$C = \varepsilon\, A / a$$

Dabei bezeichnet ε die Dielektrizitätskonstante, A die Fläche der Kondensatorplatten und a den Abstand der Kondensatorplatten voneinander. Sind die Kondensatorplatten senkrecht zur Hauptverformungsrichtung angeordnet, so bewirkt die Verformung eine maximale Veränderung des Abstands a der Konensatorplatten, d.h., die Kapazität C wird maximal verändert. Bei einer Abweichung der Senkrechten der Kondensatorplatten von der Hauptverformungsrichtung verändert sich bei Verformung auch die wirksame Fläche A der Kondensatorplatten um einen Betrag ΔA. Bei einer Abweichung der Senkrechten der Kondensatorplatten von der Hauptverformungsrichtung ist diese Abweichung derart klein zu halten, daß ΔA gegenüber A vernachlässigbar klein ist.

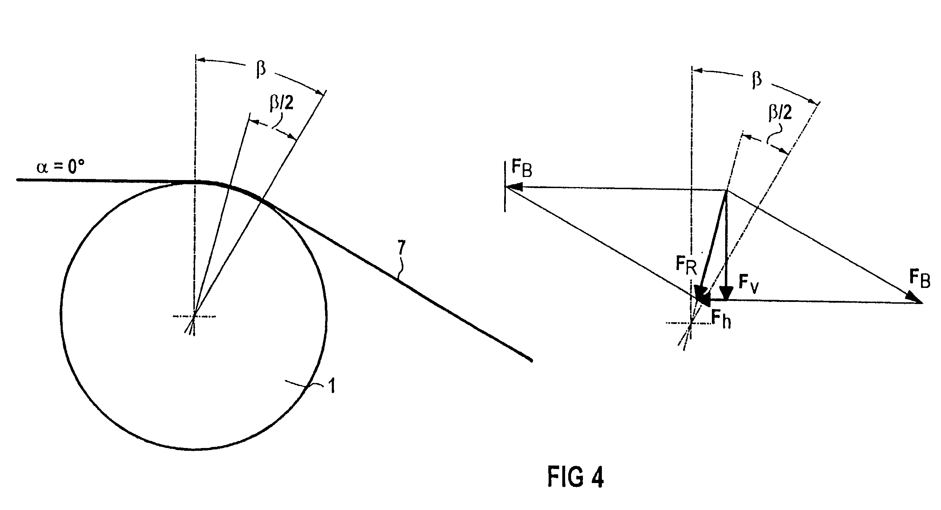

FIG 4 zeigt ein Kräftediagramm für die auf die Rolle 1 wirkende Kraft. Dabei bezeichnen

$F_B$     die Zugkraft im Metallband 7

$F_R$    die resultierende Kraft auf die Rolle 1

$F_v$    die Vertikalkomponente der resultierenden Kraft $F_R$ auf die Rolle 1

$F_h$    die Horizontalkomponente der resultierenden Kraft $F_R$ auf die Rolle 1.

Bei der folgenden Berechnung der in FIG 4 dargestellten Kräfte wird von folgenden Bedingungen ausgegangen:

- der Einlaufwinkel $\alpha$ ist 0°
- der Ablaufwinkel von der Meßrolle $\beta$ ist 5 bis 10°
- die Reaktionskräfte verteilen sich symmetrisch auf zwei Lager, in denen die Rolle gelagert ist.

Damit ergibt sich für jedes Lager

$$F_v = 0.5\, F_B\, \sin\beta$$

und

$$F_h = 0.5\, F_B\, \sin\beta\, \tan\beta/2.$$

Damit ergeben sich folgende Kraftverhältnisse in den Lagern der Rolle in Abhängigkeit vom Ablaufwinkel $\beta$:

| $\beta$ | $F_B / F_B$ | $F_v / F_B$ | $F_h / F_B$ |
|---|---|---|---|
| 5° | 1 | 0.04358 | 0.00190 |
| 7.5° | 1 | 0.06526 | 0.00428 |
| 10° | 1 | 0.08682 | 0.00760 |

Zur Berechnung der Verschiebung des freien Endes 3 des Lagerblocks 12 gegenüber dem verankerten Ende 9 des Lagerblocks 12 wird von zwei Biegeträgern 5, 10 ausgegangen. Es wird ferner davon ausgegangen, daß sich die Vertikalkraft $F_v$ zu gleichen Teilen auf die Biegeträger 5, 10 verteilt, so daß beide mit der Hälfte der Vertikalkraft $F_v$ belastet werden. Weiterhin wird angenommen, daß der obere Biegeträger (mit Bezugszeichen 5 bezeichnet in den FIG 1, 2, 3 und 7) zusätzlich als Zugstab, belastet wird und daß der untere Biegeträger (mit Bezugszeichen 10 in FIG 1, 2, 3 und 7 bezeichnet) zusätzlich als Druckstab belastet wird.

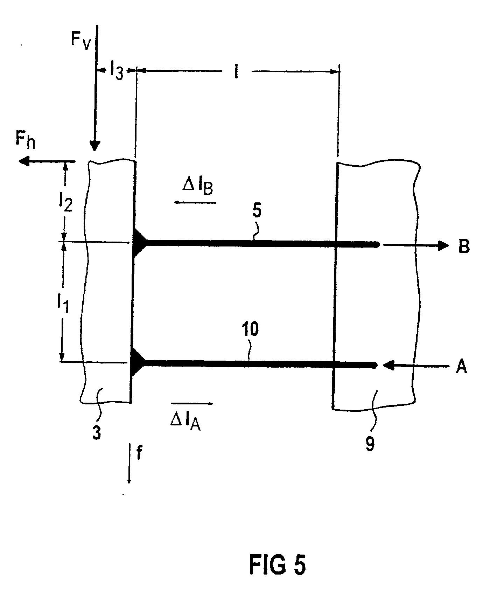

FIG 5 verdeutlicht die sich aufgrund der resultierenden Kraft $F_R$ einstellenden Kräfte $F_V$, $F_H$ und Verschiebungen $\Delta l_A$, $\Delta l_B$ und f. Die Verschiebung f des freien Endes 3 des Lagerblocks 12 gegenüber dem verankerten Ende 9 des Lagerblocks 12 in vertikaler Richtung errechnet sich als:

$$f = 0{,}5 F_v\, \frac{l^3}{Ebh^3}$$

wobei

E der Elastizitätsmodul = 206000 N/mm$^2$,
b die Breite der Biegeträger
h die Dicke der Biegeträger
l die Länge der Biegeträger

ist.

Unter der Voraussetzung geringer Verformungen erfolgt eine zusätzliche Streckung $\Delta l_B$ bzw. Stauchung $\Delta l_A$ der Biegeträger 5 bzw. 10, die zu einem Abkippen des freien Endes 3 des Lagerblocks 12 gegenüber dem verankerten Ende 9 des Lagerblocks 12 führt.

Der obere Biegeträger 5 wird durch eine Kraft

$$B = \frac{1}{l_1}\left(l_3 F_v + \left(l_2 + l_1\right)F_n\right)$$

gestreckt und der untere (Biegeträger 10) durch eine Kraft

$$A = \frac{l}{l_1}(l_3 F_v + l_2 F_n)$$

gestaucht.

Die Streckung $\Delta l_B$, verursacht durch Kraft B, bzw. die Stauchung $\Delta l_A$, verursacht durch Kraft A, beträgt

$$\Delta l_B = B\, \frac{l}{Ebh}$$

bzw.

$$\Delta l_A = A\, \frac{l}{Ebh}.$$

Bei entsprechender Gestaltung und Dimensionierung des Lagerblocks und der Biegeträger bleibt die Verformung des Systems nahezu unbeeinflußt von den Horizontalkräften.

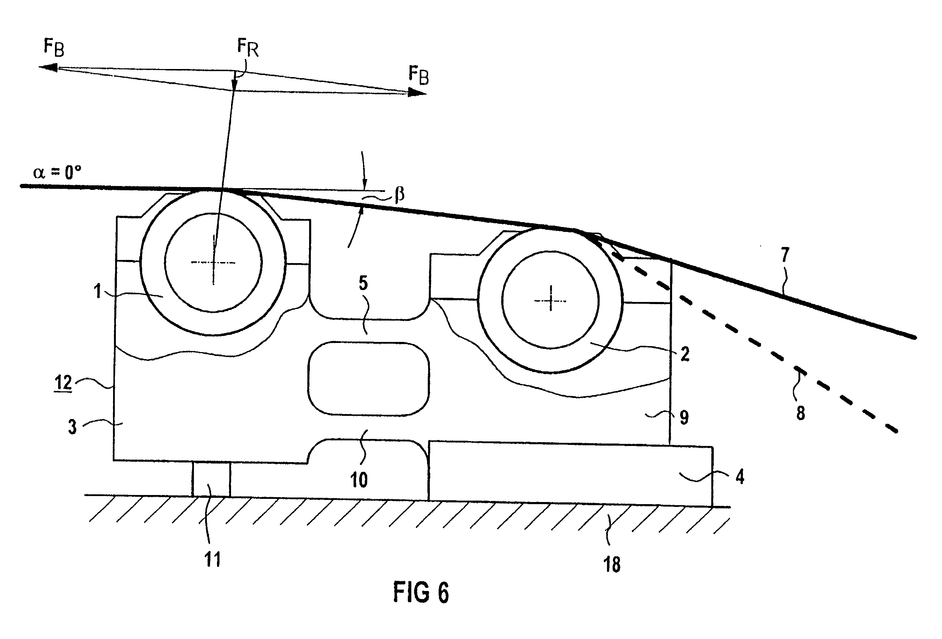

FIG 6 zeigt ein Ausführungsbeispiel für eine erfindungsgemäße Einrichtung zur Messung der Zugkraft in einem Metallband in alternativer Ausgestaltung zu dem Ausführungsbeispiel gemäß FIG 1,2 und 3. Die Bezugszeichen 1,2,3,4,5,7,8,9,10 und 12 entsprechen den Bezugszeichen 1,2,3,4,5,7,8,9,10 und 12 in FIG 1. Entsprechendes gilt für die Kräfte $F_B$ und $F_R$. Zur Messung der durch die Kraft $F_R$ verursachten vertikalen Verschiebung des freien Endes 3 des Lagerblocks 12 gegenüber dem verankerten Ende 9 des Lagerblocks 12 ist in dem Ausführungsbeispiel gemäß FIG 6 ein Sensor 11 zur Messung dieser Verschiebung unterhalb des freien Endes des Lagerblocks 12 angeordnet. Vorteilhafter Weise ist der Sensor 11 zwischen dem freien Ende 3 des Lagerblocks 12 und einem Fundament 18 bzw. einem Auflager angeordnet.

Die vorteilhafte Ausgestaltung der erfindungsgemäßen Einrichtung gemäß FIG 1 und 6 zur Messung der Zugkraft in einem Metallband 7 wird besonders vorteilhaft zur Messung der Zugkraft in einem Metallband 7 vor oder hinter einem Haspel, insbesondere zwischen einem Haspel und einem Walzgerüst eingesetzt. Wird die Einrichtung gemäß FIG 1 bzw. FIG 6 zwischen einem Walzgerüst, aus dem ein Metallband ausläuft, und einem Haspel, auf den das Metallband aufgehaspelt wird, angeordnet, so ist es entsprechend FIG 1 bzw. 6 einzusetzen. Wird die Einrichtung dagegen zwischen einem Haspel, von dem ein Metallband abgehaspelt wird, und einem Walzgerüst, in daß das Metallband einläuft, angeordnet, so ist das Metallband zunächst über die Umlenkrolle 2 und danach über die Rolle 1 zu führen, so daß α der Ablaufwinkel und β der Einlaufwinkel des Metallbandes ist.

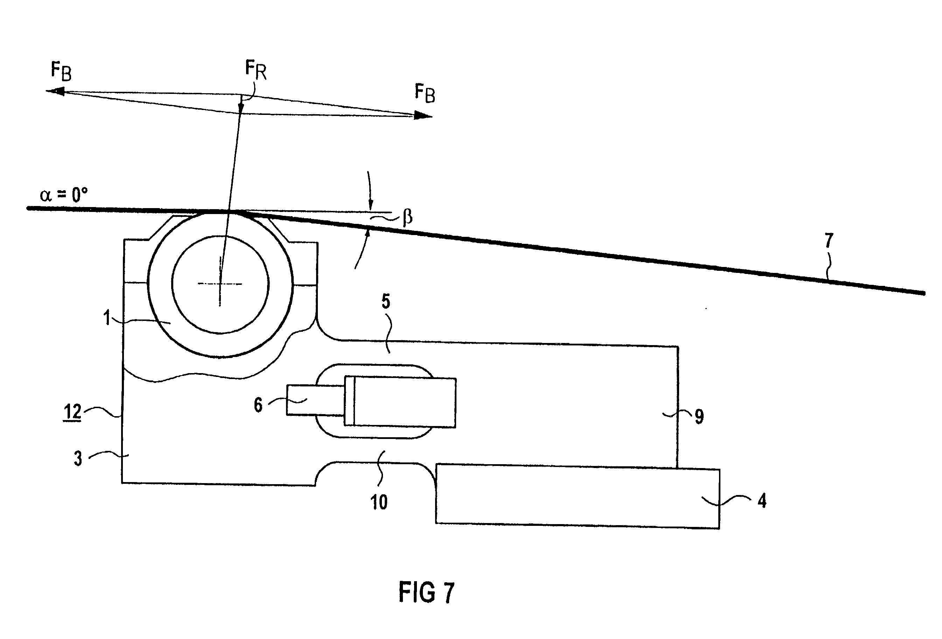

FIG 7 zeigt ein weiteres alternatives Ausführungsbeispiel für eine erfindungsgemäße Einrichtung zur Messung der Zugkraft in einem Metallband. Dabei entsprechen Bezugszeichen 1, 3, 4, 5, 6, 7, 9, 10 und 12 den entsprechenden Bezugszeichen in FIG 1. Entsprechendes gilt für die Zugkraft $F_B$ im Metallband 7 und die resultierende Kraft $F_R$. Der Ablaufwinkel β stellt sich entsprechend der Anordnung zwischen dem Lagerblock 12 und einer nachfolgenden Einrichtung, z. B. einem Haspel oder einem Walzgerüst, ein.

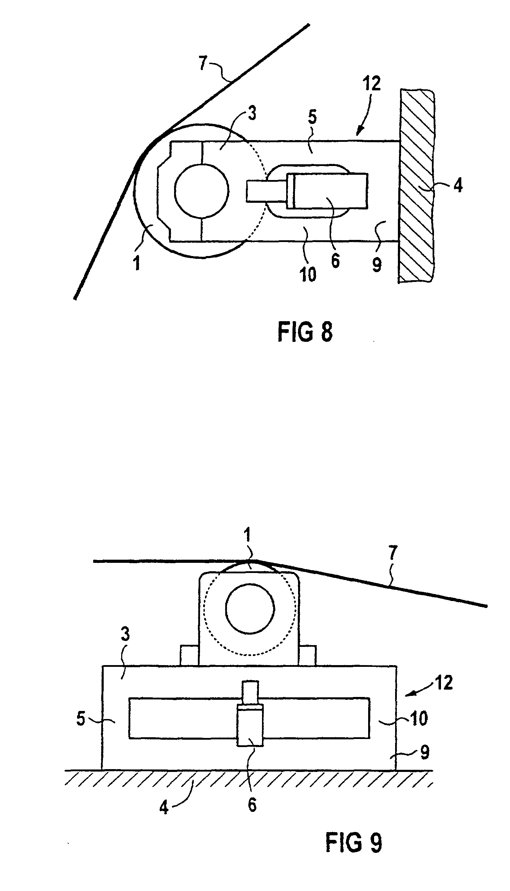

FIG 8 zeigt ein weiteres alternatives Ausführungsbeispiel für eine erfindungsgemäße Einrichtung zur Messung der Zugkraft in einem Metallband. Dabei entsprechen Bezugszeichen 1, 3, 5, 6, 7, 9, 10 und 12 den entsprechenden Bezugszeichen in FIG 1. Der Lagerblock 12 ist an einer senkrechten Verankerung 4 befestigt.

FIG 9 zeigt ein weiteres alternatives Ausführungsbeispiel für eine erfindungsgemäße Einrichtung zur Messung der Zugkraft in einem Metallband 7. Dabei entsprechen Bezugszeichen 1,3,4,5, 6,7,9,10 und 12 den entsprechenden Bezugszeichen in FIG 1. Im Gegensatz zum Ausführungsbeispiel gemäß FIG 1 ist das freie Ende 3 des Lagerblocks 12 über dem verankerten Ende 9 des Lagerblocks 12 angeordnet. Der Sensor 6 ist derart angeordnet, daß er eine horizontale Verschiebung des freien Endes 3 des Lagerblocks gegenüber dem verankerten Ende 9 des Lagerblocks 12 mißt.

**Patentansprüche**

1. Einrichtung zur Messung der Zugkraft ($F_B$) in einem Metallband (7) einer Walzstraße, wobei das Metallband (7) über eine Rolle (1) geführt wird, die in einem Lagerblock (12) gelagert ist, und der Lagerblock (12) ein verankertes Ende (9) und ein freies Ende (3) aufweist, wobei die Rolle (1) im Bereich des freien Endes (3) des Lagerblocks (12) angeordnet ist,
**dadurch gekennzeichnet,**
**dass** die Einrichtung zur Messung der Zugkraft ($F_B$) einen als kapazitiven Sensor oder als Plattenkondensator ausgebildeten, Sensor (6,11) zur Messung einer Lageänderung des freien Endes (3) des Lagerblocks (12) gegenüber dem verankerten Ende (9) des Lagerblocks (12) aufweist.

2. Einrichtung nach Anspruch 1,
**dadurch gekennzeichnet,**
**dass** sie zumindest zwei Biegeträger (5,10) zwischen dem freien Ende (3) und dem verankerten Ende (9) des Lagerblocks (12) aufweist.

3. Einrichtung nach Anspruch 1 oder 2,
**dadurch gekennzeichnet,**
**dass** der Sensor (6,11) eine Lageänderung (f) des freien Endes (3) des Lagerblocks (12) gegenüber dem verankerten Ende (9) des Lagerblocks (12) in vertikaler Richtung messend ausgebildet ist.

4. Einrichtung nach Anspruch 1, 2 oder 3,
**dadurch gekennzeichnet,**
**dass** der Sensor (6) zwischen dem freien Ende (3) des Lagerblocks (12) und dem verankerten Ende (9) des Lagerblocks (12) angeordnet ist.

5. Einrichtung nach Anspruch 1, 2, 3 oder 4,
**dadurch gekennzeichnet,**
**dass** der Sensor (11) unterhalb des freien Endes (3) des Lagerblocks (12) angeordnet ist.

6. Einrichtung nach Anspruch 1, 2, 3, 4 oder 5,
**dadurch gekennzeichnet,**
**dass** die Kondensatorplatten (13,14,15) des als kapazitiven Sensor bzw. als Plattenkondensator ausgebildeten Sensors (6,11) parallel bzw. weitestgehend parallel zu den Biegeträgern (5,10) angeordnet sind.

7. Einrichtung nach einem der Ansprüche 1 bis 6,
**dadurch gekennzeichnet,**
**dass** der Lagerblock (12) eine Umlenkrolle (2) über die das Metallband (7) geführt wird, aufweist.

8. Einrichtung nach Anspruch 7,
**dadurch gekennzeichnet,**
**dass** die Umlenkrolle (2) im Bereich des verankerten Endes (9) des Lagerblocks (12) angeordnet ist.

9. Einrichtung nach Anspruch 7 oder 8,
**dadurch gekennzeichnet,**
**dass** die Umlenkrolle (2) in Laufrichtung des Metallbandes (7) hinter der Rolle (1) angeordnet ist.

10. Einrichtung nach Anspruch 7, 8 oder 9,
**dadurch gekennzeichnet,**

**dass** die Rolle (1) und die Umlenkrolle (2) derart angeordnet sind, dass das Metallband (7) zwischen ihnen einen Winkel β gegenüber der Horizontalen von 3° bis 15° aufweist.

11. Einrichtung nach einem der Ansprüche 1 bis 10, **dadurch gekennzeichnet,**
    **dass** sie zwischen dem letzten Walzgerüst der Walzstraße und einem Haspel zum Aufhaspeln des Metallbandes angeordnet ist.

12. Einrichtung nach einem der Ansprüche 1 bis 11, **dadurch gekennzeichnet,**
    **dass** sie zwischen einem Haspel zum Abhaspeln des Metallbandes und dem ersten Walzgerüst der Walzstraße angeordnet ist.

13. Einrichtung nach einem der vorhergehenden Ansprüche,
    **dadurch gekennzeichnet,**
    **dass** das Metallband ein Stahlband ist.

14. Einrichtung nach einem der vorhergehenden Ansprüche ,
    **dadurch gekennzeichnet,**
    **dass** die Walzstraße eine Kaltwalzstraße ist.

**Claims**

1. Device for measuring the tensile force ($F_B$) in a metal strip (7) in a rolling mill, the metal strip (7) being led over a roller (1) which is mounted in a bearing block (12), and the bearing block (12) having an anchored end (9) and a free end (3), the roller (1) being arranged in the region of the free end (3) of the bearing block (12), **characterized in that** the device for measuring the tensile force ($F_B$) has a sensor (6, 11) formed as a capacitive sensor or as a plate capacitor for measuring a change in the position of the free end (3) of the bearing block (12) with respect to the anchored end (9) of the bearing block (12).

2. Device according to Claim 1, **characterized in that** it has at least two bending beams (5, 10) between the free end (3) and the anchored end (9) of the bearing block (12).

3. Device according to Claim 1 or 2, **characterized in that** the sensor (6, 11) is designed to measure a change (f) in the vertical direction in the position of the free end (3) of the bearing block (12) with respect to the anchored end (9) of the bearing block (12).

4. Device according to Claim 1, 2 or 3, **characterized in that** the sensor (6) is arranged between the free end (3) of the bearing block (12) and the anchored end (9) of the bearing block (12).

5. Device according to Claim 1, 2, 3 or 4, **characterized in that** the sensor (11) is arranged underneath the free end (3) of the bearing block (12).

6. Device according to Claim 1, 2, 3, 4 or 5, **characterized in that** the capacitor plates (13, 14, 15) of the sensor (6, 11) formed as a capacitive sensor or as a plate capacitor are arranged parallel to or to the greatest extent parallel to the bending beams (5, 10).

7. Device according to one of Claims 1 6, **characterized in that** the bearing block (12) has a deflection roller (2) over which the metal strip (7) is guided.

8. Device according to Claim 7, **characterized in that** the deflection roller (2) is arranged in the region of the anchored end (9) of the bearing block (12).

9. Device according to Claim 7 or 8, **characterized in that** the deflection roller (2) is arranged after the roller (1) in the running direction of the metal strip (7).

10. Device according to Claim 7, 8 or 9, **characterized in that** the roller (1) and the deflection roller (2) are arranged in such a way that the metal strip (7) between them is at an angle β with respect to the horizontal of 3° to 15°.

11. Device according to one of Claims 1 to 10, **characterized in that** it is arranged between the last roll stand of the rolling mill and a coil for coiling up the metal strip.

12. Device according to one of Claims 1 to 11, **characterized in that** it is arranged between a coil for uncoiling the metal strip and the first roll stand of the rolling mill.

13. Device according to one of the preceding claims, **characterized in that** the metal strip is a steel strip.

14. Device according to one of the preceding claims, **characterized in that** the rolling mill is a cold rolling mill.

**Revendications**

1. Dispositif de mesure de la force de traction ($F_B$) dans un feuillard (7) métallique d'un train de laminoirs, en faisant passer le feuillard (7) métallique sur un rouleau (1) qui est monté dans un bloc (12) formant palier et le bloc (12) formant palier ayant une extrémité (9) encastrée et une extrémité (3) libre, le rouleau (1) étant disposé dans la zone de l'extrémité (3) libre du bloc (12) formant palier,
**caractérisé**

**en ce que** le dispositif de mesure de la force de traction ($F_B$) a un capteur (6, 11), constitué en capteur capacitif ou en condensateur à plateaux, de mesure d'une variation de position de l'extrémité (3) libre du bloc (12) formant palier par rapport à l'extrémité (9) encastrée du bloc (12) formant palier.

2.  Dispositif suivant la revendication 1,
**caractérisé**

**en ce qu'**il a au moins deux poutres (5, 10) de flexion entre l'extrémité (3) libre et l'extrémité (9) encastrée du bloc (12) formant palier.

3.  Dispositif suivant la revendication 1 ou 2,
**caractérisé**

**en ce que** le capteur (6, 11) est constitué de manière à mesurer dans la direction verticale une variation (F) de position de l'extrémité (3) libre du bloc (12) formant palier par rapport à l'extrémité (9) encastrée du bloc (12) formant palier.

4.  Dispositif suivant la revendication 1, 2 ou 3,
**caractérisé**

**en ce que** le capteur (6) est disposé entre l'extrémité (3) libre du bloc (12) formant palier et l'extrémité (9) encastrée du bloc (12) formant palier.

5.  Dispositif suivant la revendication 1, 2, 3 ou 4,
**caractérisé**

**en ce que** le capteur (11) est disposé en dessous de l'extrémité (3) libre du bloc (12) formant palier.

6.  Dispositif suivant la revendication 1, 2, 3, 4 ou 5,
**caractérisé**

**en ce que** les plateaux (13, 14, 15) du condensateur du capteur (6, 11 ) constitué en capteur capacitif ou en condensateur à plateaux sont disposés parallèlement ou dans une grande mesure parallèlement aux poutres (5, 10) de flexion.

7.  Dispositif suivant l'une des revendications 1 à 7,
**caractérisé**

**en ce que** le bloc (12) formant palier a un rouleau (2) de renvoi sur lequel passe le feuillard (7) métallique.

8.  Dispositif suivant la revendication (7)
**caractérisé**

**en ce que** le rouleau (2) de renvoi est disposé dans la zone de l'extrémité (9) encastrée du bloc (12) formant palier.

9.  Dispositif suivant la revendication 7 ou 8,
**caractérisé**

**en ce que** le rouleau (2) de renvoi est disposé derrière, dans le sens de passage du feuillard (7) métallique, le rouleau (1).

10. Dispositif suivant la revendication 7, 8 ou 9,
**caractérisé**

**en ce que** le rouleau (1) et le rouleau (2) de renvoi sont disposés de façon à ce que le feuillard (7) métallique fassent entre eux un angle β avec l'horizontal de 3° à 15°.

11. Dispositif suivant l'une des revendications 1 à 10,
**caractérisé**

**en ce qu'**il est disposé entre la dernière cage de laminoir du train de laminoirs et une enrouleuse d'enroulement du feuillard métallique.

12. Dispositif suivant l'une des revendications 1 à 11,
**caractérisé**

**en ce qu'**il est disposé entre une enrouleuse d'enroulement du feuillard métallique et la première cage de laminoir du train de laminoirs.

13. Dispositif suivant l'une des revendications précédentes,
**caractérisé**

**en ce que** le feuillard métallique est un feuillard d'acier.

14. Dispositif suivant l'une des revendications précédentes,
**caractérisé**

**en ce que** le train de laminoirs est un train de laminoirs à froid.

FIG 1

$F_B$  $F_R$  $F_B$

$\alpha = 0°$  $\beta$

1  5  2

6  7

12  8

3  9

10  4

EP 0 908 247 B1

8

**FIG 2**

**FIG 3**

FIG 4

10

**FIG 5**

FIG 6

FIG 7

EP 0 908 247 B1

FIG 8

FIG 9